# EUROPÄISCHE PATENTSCHRIFT

(11) **EP 0 624 428 B1**
(45) Veröffentlichungstag und Bekanntmachung des Hinweises auf die Patenterteilung: **31.07.1996**
(21) Anmeldenummer: 94810218.1
(22) Anmeldetag: 19.04.1994
(51) Int. Cl.: B23Q 7/14

(54) **Einrichtung zum positionsdefinierten Aufspannen eines Werkstücks am Arbeitsplatz einer Bearbeitungsmaschine**
Device for induced clamping of a workpiece on a workplace of a processing machine
Dispositif pour le blocage indexé d'une pièce à un poste de travail d'une machine d'usinage

(30) Priorität: 04.05.1993 DE 4314629
(43) Veröffentlichungstag der Anmeldung: 17.11.1994
(73) Patentinhaber: Erowa AG, CH-5734 Reinach (CH)
(72) Erfinder: Obrist, Basil, CH-5728 Gontenschwil (CH)
(74) Vertreter: Rottmann, Maximilian R.

(56) Entgegenhaltungen:
- EP-A- 0 249 021
- EP-A- 0 255 042
- EP-A- 0 403 428
- DD-A- 122 934
- DE-U- 9 203 992
- FR-A- 2 440 246
- FR-A- 2 517 580

## Beschreibung

Die Erfindung betrifft eine Einrichtung zum positionsdefinierten Aufspannen eines Werkstücks am Arbeitsplatz einer Bearbeitungsmaschine, mit einem am Arbeitsplatz der Bearbeitungsmaschine zu fixierenden Untersatz und einem auf den Untersatz aufsetzbaren und daran festspannbaren Werkstückträger, ferner mit Richtelementen am Untersatz und am Werkstückträger, welche paarweise zusammenarbeiten und den Werkstückträger in drei zueinander senkrechten Koordinatenachsen (X, Y, Z) und winkelgerecht auf den Untersatz ausrichten, und mit einer Spannvorrichtung, deren Spannkraft den Werkstückträger in der durch die Richtelemente festgelegten Position am Untersatz festhält, wobei als Richtelementepaare für die Festlegung der Position in einer zur Wirkungslinie der Spannkraft parallelen Koordinatenachse (Z) einander gegenüberstehende Anschlagflächen am Untersatz und am Werkstückträger vorhanden sind, während für die Festlegung der Position in einer durch die beiden anderen Koordinatenachsen (X, Y) gebildeten Koordinatenebene (X-Y) lineare Richtelementepaare vorgesehen sind, welche je ein keilförmiges Zentrierlineal und ein Gegenstück mit einem dazu passenden Zentrierspalt aufweisen.

Bei einer bekannten Aufspanneinrichtung dieser Art sind je zwei lineare Richtelementpaare zur Festlegung der Position in der durch zwei Koordinatenachsen (X, Y) gebildeten Koordinatenebene (X-Y) im Kreis um eine zentrale Spannvorrichtung angeordnet, wobei die Wirkungslinie der Spannvorrichtung in der dritten Koordinatenachse (Z) liegt und die Arbeitsflanken der keilförmigen Zentrierlineale und die Arbeitskanten der zugehörigen Zentrierspalte radial zur Z-Achse verlaufen. Die Zentrierspalte sind durch Aussparungen in einer gemeinsamen horizontalen Platte gebildet, welche in Richtung der Z-Achse nachgiebig ist. Diese Platte ist am Werkstückträger angebracht, während die Zentrierlineale am Untersatz befestigt sind. Die Spannvorrichtung besteht aus einem im Untersatz befindlichen Spannfutter mit Kugelgesperre und einem am Werkstückträger vorstehenden Spannzapfen, der zum Aufspannen des Werkstückträgers in das Spannfutter am Untersatz einsetzbar ist. Aufspanneinrichtungen in dieser Ausführungsform weisen eine hohe Reproduzierbarkeit der Position des Werkstückträgers bezüglich des Untersatzes auf und haben sich zum positionsdefinierten Aufspannen von Werkstücken seit längerem bewährt, insbesondere wenn die beim Bearbeitungsvorgang auf die Werkstücke ausgeübten Kräfte vernachlässigbar klein sind, wie das z.B. bei der elektroerosiven Bearbeitung der Fall ist.

Bei der spanabhebenden Bearbeitung begrenzt die Belastbarkeit solcher Aufspanneinrichtungen deren Anwendungsbereich im wesentlichen auf Werkstücke, deren Abmessungen nicht grösser sind als diejenigen der Aufspanneinrichtung selbst. Bei der Bearbeitung grösserer Werkstücke können an der Aufspanneinrichtung Kräfte auftreten, die unter Umständen so gross werden, dass die linearen Richtelemente und die Spannvorrichtung übermässig beansprucht werden und ihre Funktion nicht mehr in der gewünschten Weise und vor allem nicht mehr mit der erforderlichen Genauigkeit erfüllen können. Kritisch sind insbesondere von den Bearbeitungskräften auf den Werkstückträger bezüglich der Z-Achse ausgeübte Drehmomente, welche an den Arbeitsflanken der für die Festlegung der X- und Y-Achse zuständigen Richtelementpaaren übermässig hohe, die Positioniergenauigkeit beeinträchtigende Druckkräfte erzeugen können. Diese Druckkräfte lassen sich einzig dadurch in zulässigen Grenzen halten, dass für die Bearbeitung grösserer Werkstücke grössere Aufspanneinrichtungen vorgesehen werden, bei denen die genannten linearen Richtelementpaare entsprechend stärker ausgebildet sind und einen genügend grossen radialen Abstand von der Z-Achse haben. Die beschriebene bekannte Aufspanneinrichtung ist jedoch von ihrem Aufbau her nicht geeignet, um sie durch einfach lineare Vergrösserung ihrer Dimensionen an die Grösse der zu bearbeitenden Werkstücke anzupassen. Insbesondere erweist sich die zentrale Anordnung der Spannvorrichtung als ungeeignet, da ein einziges Spannorgan infolge der höheren Spannkraft entsprechend gross ausfallen würde. Die Aufspanneinrichtung würde dadurch ziemlich unförmig und schwer und damit ungeeignet für die praktische Handhabung. Ausserdem würden die Kosten für eine solche Aufspanneinrichtung in vergrössertem Format zu hoch.

Eine andere Lösung zum Aufspannen grösserer Werkstücke besteht gemäss der EP-A-0 403 428 darin, vier Aufspanneinrichtungen der beschriebenen Art vorzusehen, welche einzeln in den vier Ecken einer rechteckigen Palette angeordnet sind. An allen vier Aufspanneinrichtungen sind Richtelementpaare für die Festlegung der Position in der Z-Achse vorhanden. Nur eine erste der vier Aufspanneinrichtungen besitzt sowohl zwei lineare Richtelementpaare für die Festlegung der X-Achse als auch zwei solche zur Festlegung der Y-Achse. Je eine Aufspanneinrichtung in den beiden benachbarten Ecken der Palette besitzt nur zwei lineare Richtelementpaare zur Festlegung der X-Achse bzw. der Y-Achse, während die vierte, der ersten diagonal gegenüberliegende Aufspanneinrichtung keine den Verlauf der X-Achse und der Y-Achse bestimmenden Richtelementpaare aufweist.

Mit Rücksicht auf die jeweils zentrale Anordnung der Spannvorrichtung und auf eine gleichmässige, kippmomentfreie Belastung derselben, sind die linearen Richtelementpaare für die Festlegung der X-Achse und der Y-Achse an jeder der betreffenden drei Aufspannvorrichtungen doppelt vorhanden, und zwar in jeweils diametraler Anordnung, so dass für die Festlegung jeder dieser Achsen also insgesamt vier lineare Richtelementpaare eingesetzt werden, obwohl aus statischen Gründen deren zwei ausreichen würden. Das gegenseitige Ausrichten der vier linearen Richtelementpaare erfordert ein überaus hohes Mass an Montagegenauigkeit, damit trotz der statisch überbestimmten Anordnung die Reproduzierbarkeit der Positionierung nicht beeinträchtigt wird. Im übrigen ist der Aufwand von vier Aufspanneinrichtungen mit je einer Spannvorrichtung für das positionsdefinierte Aufspannen eines Werkstücks verhältnismässig hoch.

Der Erfindung liegt deshalb die Aufgabe zugrunde, eine verbesserte Aufspanneinrichtung der eingangs genannten Art zu schaffen, welche unter Vermeidung der beschriebenen Nachteile eine kompakte Bauform der Aufspanneinrichtung bei erhöhter Belastbarkeit ermöglicht und mit dem erforderlichen Minimum an linearen Richtelementpaaren für die Festlegung der X- und Y-Achsen auskommt.

Bei einer Aufspanneinrichtung der eingangs definierten Art lässt sich diese Aufgabe dadurch lösen, dass erfindungsgemäss von den die Position in der genannten Koordinatenebene (X-Y) festlegenden linearen Richtelementepaaren an zwei einander gegenüberliegenden Endbereichen der Einrichtung je ein Richtelementepaar angeordnet ist, welche beiden Richtelementepaare zusammen die Position in der einen, quer zur Verbindungslinie derselben verlaufenden Koordinatenachse (Y) und deren Winkellage festlegen, dass in der Mitte zwischen den genannten beiden Richtelementepaaren ein drittes Richtelementepaar für die Festlegung der Position in der anderen Koordinatenachse (X) angeordnet ist, und dass die Spannvorrichtung zwei synchron arbeitende Spannorgane aufweist, welche je zwischen einem endseitigen und dem mittleren der genannten drei linearen Richtelementepaare angeordnet sind.

Diese Aufspanneinrichtung weist zur Festlegung der X- und Y-Achsen nur drei lineare Richtelementpaare auf, welche zusammen mit den beiden Spannorganen im wesentlichen längs einer geraden Verbindungslinie angeordnet sind. Dabei nehmen die beiden endseitigen Richtelementpaare die von Drehmomenten um die Z-Achse herrührenden Kräfte auf. Deren gegenseitiger Abstand soll demnach möglichst gross sein. Die Aufspanneinrichtung kann also bei einer bestimmten, in Richtung der Verbindungslinie gemessenen Länge verhältnismässig schmal sein, wobei bezüglich der gesamten Baugrösse im wesentlichen nur die Länge der Aufspanneinrichtung deren Belastbarkeit bestimmt. In Anbetracht dessen lässt sich die Baugrösse der Aufspanneinrichtung mit erheblich weniger grossem Aufwand an einen bestimmten Grössenbereich der zu bearbeitenden Werkstücke anpassen.

Eine bevorzugte Ausführungsform der erfindungsgemässen Aufspanneinrichtung besteht darin, dass der Untersatz einen Gehäuseblock aufweist, an dessen Oberseite die einen Richtelemente der Richtelementepaare für die Festlegung der Position des Werkstückträgers in allen drei Koordinatenachsen (X, Y, Z) angeordnet sind und in dem die beiden Spannorgane untergebracht sind, und dass der Werkstückträger eine Platte aufweist, an deren ebener Unterseite die den betreffenden Richtelementen des Untersatzes zugeordneten Richtelemente für die Festlegung der Position des Werkstückträgers in den beiden die genannte Koordinatenebene (X-Y) bildenden Koordinatenachsen (X, Y) befestigt sind. Vorzugsweise sind dabei die je einen Zentrierspalt bildenden Richtelemente am Untersatz und die je ein Zentrierlineal bildenden Richtelemente am Werkstückträger angeordnet. Auf diese Weise sind an der den Werkstückträger bildenden Platte ausser den Zentrierlinealen keine zusätzlichen Elemente vorhanden. Im übrigen befinden sich alle beweglichen Teile der Einrichtung am Untersatz. Dadurch bildet der Werkstückträger einen verhältnismässig einfachen Bauteil mit geringstmöglichem Gewicht, was seine Handhabung erleichtert.

Im Gegensatz zur der bekannten Aufspanneinrichtung mit in einer gemeinsamen Zentrierplatte angeordneten Zentrierschlitzen besteht im Hinblick auf eine höhere Belastbarkeit zweckmässig jedes der einen Zentrierspalt bildenden Richtelemente aus zwei einzeln am Gehäuseblock befestigten Zentrierlappen mit einander gegenüberstehenden, den Zentrierschlitz begrenzenden Arbeitsflanken. Die einzelnen Zentrierlappen können, ähnlich wie die genannte Zentrierscheibe, biegeelastisch ausgebildet sein und beispielsweise eine durch Querschnittsverminderung gebildete Biegestelle aufweisen. Unter Umständen kann es zweckmässig sein, wenn sich die beiden Zentrierlappen im Zentrierbereich gemeinsam auf einem separaten Federpaket abstützen, um die Zentrierlappen von den Biegekräften wenigstens teilweise zu entlasten und deren Rückstellung zu sichern.

In Bezug auf die Ausbildung der Spannvorrichtung wird eine Lösung bevorzugt, bei der jedes der beiden Spannorgane einen schwenkbaren Zughaken aufweist, der in seiner Wirklage an der Platte des Werkzeugträgers angreift. Dazu kann die Platte des Werkstückträgers zwei Öffnungen aufweisen, in welchen je ein Vorsprung vorgesehen ist, wobei jeder Zughaken beim Aufsetzen des Werkstückträgers auf den Untersatz in die betreffende Öffnung der Platte eingreift und in seiner Wirkungslage den Vorsprung hintergreift. Es hat sich als praktisch erwiesen, jedem Zughaken ein Antriebsmittel zum Verschwenken des Zughakens und zur Erzeugung der Spannkraft zuzuordnen. Dabei dienen als Antriebsmittel vorzugsweise zwei im Gehäuseblock vorgesehene Kraftzylinder mit gegenläufig arbeitenden Kolben, welche beidseitig mit einem Druckmittel beaufschlagbar sind und mit je einem Zughaken in direkter Wirkverbindung stehen. Diese Wirkverbindung kann z.B. durch ein Keilgetriebe verwirklicht werden.

Im praktischem Betrieb kann es vorkommen, dass die Druckmittelzufuhr zur Spannvorrichtung während eines Bearbeitungsvorgangs ausfällt oder betriebsmässig unterbrochen werden muss, z.B. beim Drehen des Bearbeitungstisches in einem Ausmass, für das die Länge der Zufuhrleitungen nicht ausreicht. Mit Vorteil sind deshalb Mittel zur Aufrechterhaltung der Spannkraft des Zughakens während einer Unterbrechung der Druckbeaufschlagung des Kolbens vorgesehen. Diese Mittel können z.B. darin bestehen, dass der Keilwinkel des Keilgetriebes so gewählt ist, dass das Keilgetriebe bei nach erfolgtem Spannvorgang wegfallender Kolbentriebkraft unter der Einwirkung der am Zughaken wirkenden Spannkraft selbsthemmend wirkt. Zudem kann eine auf den Kolben wirkende, die Reibungskraft des selbsthemmenden Keilgetriebes unterstützende Druckfeder vorgesehen sein.

Eine wesentliche Voraussetzung für den ordnungsgemässen Betrieb der Aufspanneinrichtung besteht darin, dass die für die genaue Positionierung massgebenden Kontaktflächen an den Richtelementen beim Aufsetzen des Werkstückträgers auf den Untersatz absolut schmutzfrei sind und auch während eines Bearbeitungsvorgangs am Werkstück von eindringendem Schutz möglichst freigehalten werden. Zu diesem Zweck können einerseits Mittel vorgesehen sein, welche zwischen dem Gehäuseblock und der Werkstückträgerplatte vor dem endgültigen Zusammenschluss derselben einen Luftvorhang zum Schutz des Innenraums gegen das Eindringen von Staub erzeugen, sowie Mittel zur Reinigung der Richtelemente durch Bestrahlung mit Druckluft. Ausserdem kann die Anordnung so getroffen sein, dass der die Richtelemente enthaltende Raum zwischen dem Gehäuseblock und der Werkstückträgerplatte im festgespannten Zustand der letzteren luftdicht abgeschlossen oder allenfalls nur vom Innenraum nach aussen luftdurchlässig ist.

Anhand der beigefügten Zeichnung wird nachstehend ein Ausführungsbeispiel der Erfindung näher erläutert. In der Zeichnung bedeuten:
- Fig. 1: eine Seitenansicht des Untersatzes der Aufspanneinrichtung;
- Fig. 2: eine Draufsicht des Untersatzes;
- Fig. 3: eine Draufsicht des Werkstückträgers;
- Fig. 4: eine Ansicht der Unterseite des Werkstückträgers;
- Fig. 5: einen Teillängsschnitt durch den Untersatz nach der Linie V-V in Fig. 2, in grösserem Massstab;
- Fig. 6: einen Querschnitt der Aufspanneinrichtung nach den Linien VI-VI in den Fig. 2 und 4, in grösserem Massstab;
- Fig. 7: einen Querschnitt des Untersatzes nach der Linie VII-VII in Fig. 2, in grösserem Massstab;
- Fig. 8: einen Teillängsschnitt eines Gehäuseblocks des Untersatzes nach der Linie VIII-VIII in Fig. 2, in grösserem Massstab, und;
- Fig. 9-11: Teillängsschnitte des Untersatzes gemäss Fig. 5 und des Werkstückträgers gemäss der Linie V-V in Fig. 4, in drei aufeinanderfolgenden Phasen des Zusammenschlusses.

Die dargestellte Aufspanneinrichtung besteht aus einem am Arbeitsplatz einer Bearbeitungsmaschine zu fixierenden Untersatz 1 und einem auf den Untersatz 1 aufsetzbaren und in einer definierten Position an diesem festspannbaren Werkstückträger 2.

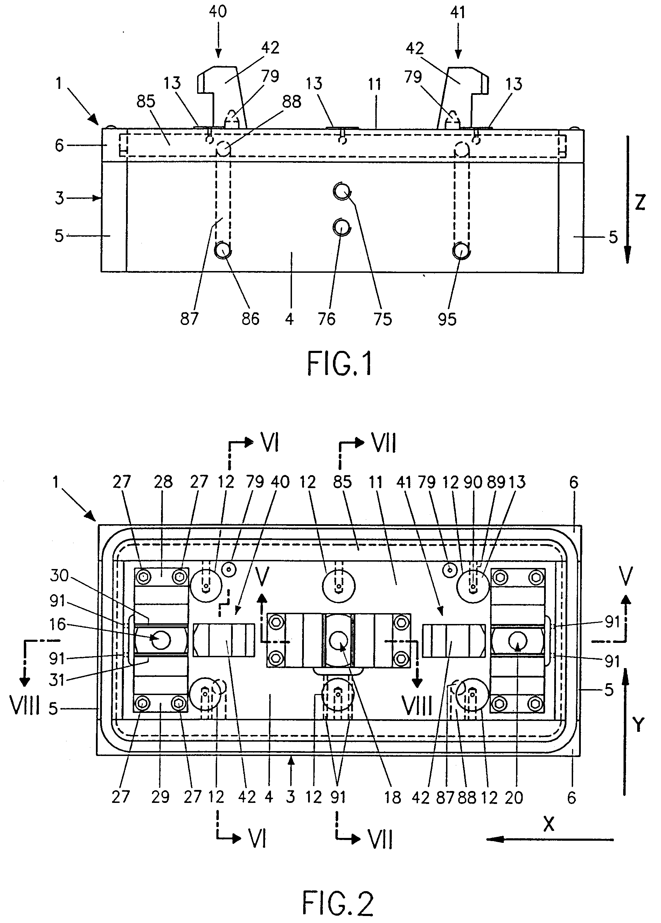

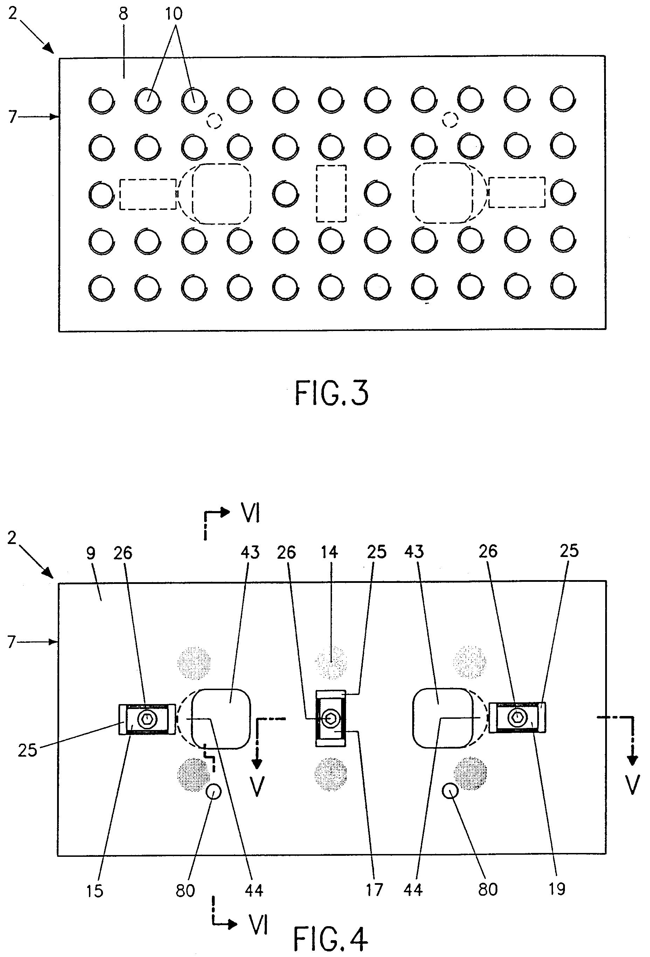

Der Untersatz 1 weist gemäss den Fig. 1 und 2 ein längliches quaderförmiges Gehäuse 3 auf, mit einem Gehäuseblock 4, an dessen Stirnseiten je ein Abschlussdeckel 5 und an dessen oberen Längskanten je eine Randleiste 6, z.B. mittels nicht dargestellter Schrauben, befestigt sind. Der Werkstückträger 2 weist gemäss den Fig. 3 und 4 eine rechteckförmige Platte 7 mit planparallelen Seitenflächen 8 und 9 auf. Zur Befestigung von Werkstücken am Werkstückträger 2 ist auf der Oberseite 8 der Platte 7 eine Mehrzahl (z.B. 48) rasterförmig angeordneter Gewindebohrungen 10 vorhanden. Selbstverständlich können auch andere oder zusätzliche Befestigungsmittel vorgesehen sein.

An der Oberseite 11 des Gehäuseblocks 4 und an der Unterseite 9 der Werkstückträgerplatte 7 befinden sich die paarweise zusammenarbeitenden Richtelemente, welche den Werkstückträger 2 in drei zueinander senkrechten Koordinatenachsen X, Y, Z und winkelgerecht auf den Untersatz 1 ausrichten.

Zu diesen Richtelementen gehören sechs Vorsprünge 12, welche an der Oberseite 11 des Gehäuseblocks 4 regelmässig verteilt angeordnet sind und deren Endseiten die Anschlagflächen 13 für die Festlegung der Position des Werkstückträgers 2 in der Z-Achse bilden. Im aufgespannten Zustand des Werkstückträgers 2 liegt die Platte 7 mit ihrer ebenen Unterseite 9 an den Anschlagflächen 13 des Gehäuseblocks 4 auf. Die betreffenden Flächenbereiche 14 an der Platte 7, welche die diesseitigen Anschlagflächen bilden, sind in Fig. 4 durch Schraffur markiert.

Für die Festlegung der Position in einer durch die beiden Koordinatenachsen X, Y gebildeten Koordinatenebene X-Y sind drei lineare Richtelementepaare 15, 16; 17, 18; 19, 20 vorgesehen, wobei die einen, am Werkstückträger 2 angeordneten Richtelemente jedes Richtelementpaars je durch ein keilförmiges Zentrierlineal 15, 17 bzw. 19 gebildet sind, während die am Untersatz 1 als Gegenstücke angeordneten Richtelemente 16, 18 bzw. 20 einen dazu passenden Zentrierspalt aufweisen. Wie aus den Fig. 2 und 4 hervorgeht, ist von diesen drei Richtelementepaaren an zwei einander gegenüberliegenden Endbereichen des Untersatzes 1 bzw. des Werkstückträgers 2 je ein Richtelementepaar 15, 16 bzw. 19, 20 angeordnet, welche beiden Richtelementepaare zusammen die Position des Werkstückträgers 2 in der quer zur Verbindungslinie derselben verlaufenden Y-Achse und deren Winkellage festlegen. In der Mitte zwischen den genannten beiden Richtelementepaaren ist das dritte Richtelementepaar 17, 18 für die Festlegung der Position in der X-Achse angeordnet.

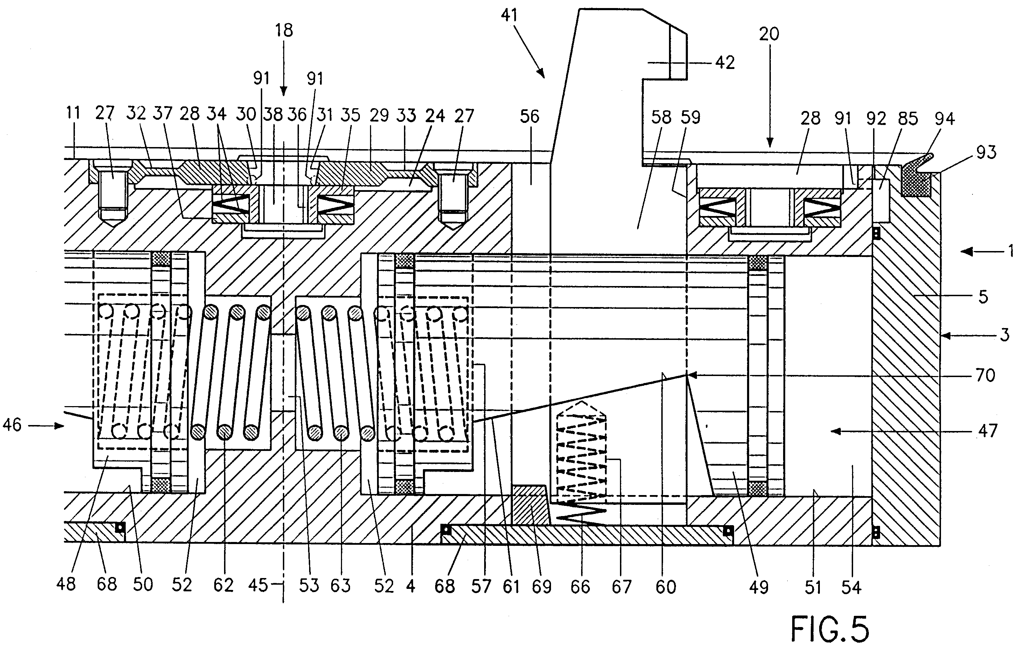

Die an der Werkstückträgerplatte 7 befindlichen Zentrierlineale 15, 17 und 19 sind in Nuten 25 eingelassen und darin mittels Schrauben 26 befestigt. Demgegenüber besteht jedes der einen Zentrierschlitz bildenden Richtelemente 16, 18 und 20 aus zwei einzeln am Gehäuseblock 4 des Untersatzes 1 mittels Schrauben 27 befestigten Zentrierlappen 28 und 29 mit einander gegenüberstehenden, den Zentrierspalt begrenzenden Arbeitsflanken 30 bzw. 31. Wie aus der Fig. 5 deutlicher hervorgeht, sind diese Zentrierlappen jeweils in einer Ausnehmung 24 an der Oberseite 11 des Gehäuseblocks 4 versenkt angeordnet. Ferner sind die Zentrierlappen 28, 29 biegeelastisch ausgebildet und weisen dazu eine durch Querschnittsverminderung gebildete Biegestelle 32 bzw. 33 auf. Im Zentrierbereich stützen sich die beiden Zentrierlappen 28, 29 auf einem separaten Federpaket ab, um die Zentrierlappen 28, 29 zu entlasten und deren Rückstellung zu sichern. Dieses Federpaket besteht aus zwei Tellerfedern 34, welche auf einer mit einem Flansch 35 versehenen Hülse 36 angeordnet sind und durch den Flansch 35 und eine Ringscheibe 37 zusammengehalten werden, wobei sich die letztere am Kopf einer in die Hülse 36 eingesetzten Schraube 38 abstützt.

Die Spannvorrichtung, welche dazu dient, den Werkstückträger 2 in der durch die Richtelemente 12, 14; 15, 16; 17, 18; 19, 20 festgelegten Position am Untersatz 1 festzuhalten, weist zwei synchron arbeitende Spannorgane 40 und 41 auf, welche je zwischen einem endseitigen und dem mittleren der drei linearen Richtelementepaare 15, 16; 17, 18; 19, 20 angeordnet sind und deren Spannkräfte zur Z-Achse parallele Wirkungslinien haben.

Jedes der beiden Spannorgane 40 und 41 weist gemäss den Fig. 1 und 2 einen schwenkbaren Zughaken 42 auf, der in seiner Wirklage an der Platte 7 des Werkstückträgers 2 angreift. Zu diesem Zweck weist die Platte 7 zwei Öffnungen 43 auf, in welchen je ein Vorsprung 44 vorgesehen ist, und zwar derart, dass jeder Zughaken 42 beim Aufsetzen des Werkstückträgers 2 auf den Untersatz 1 in die betreffende Öffnung 43 der Platte 7 eingreift und in seiner Wirklage den Vorsprung 44 hintergreift.

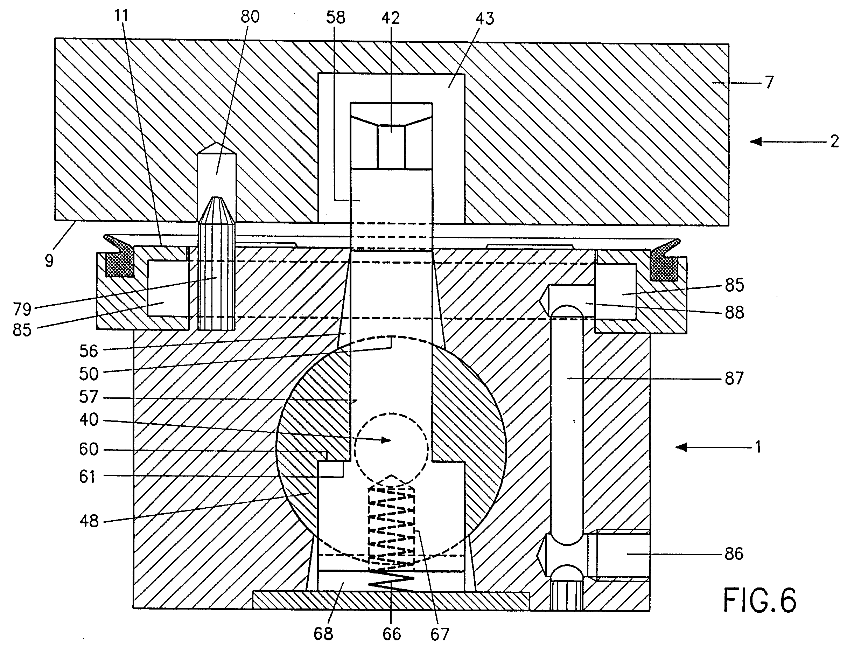

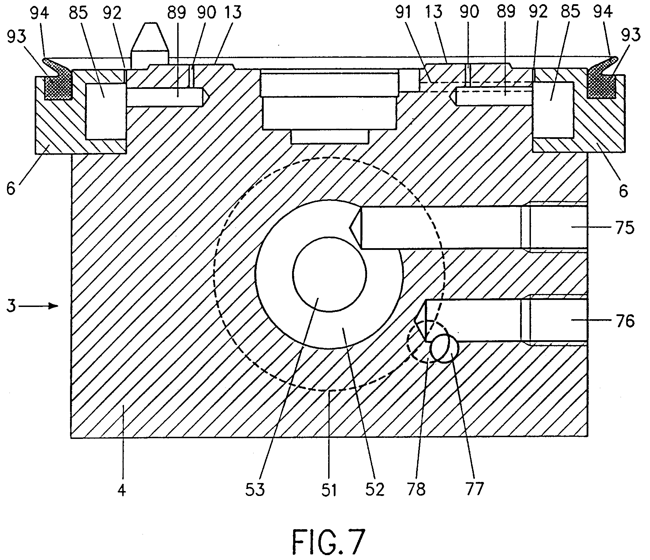

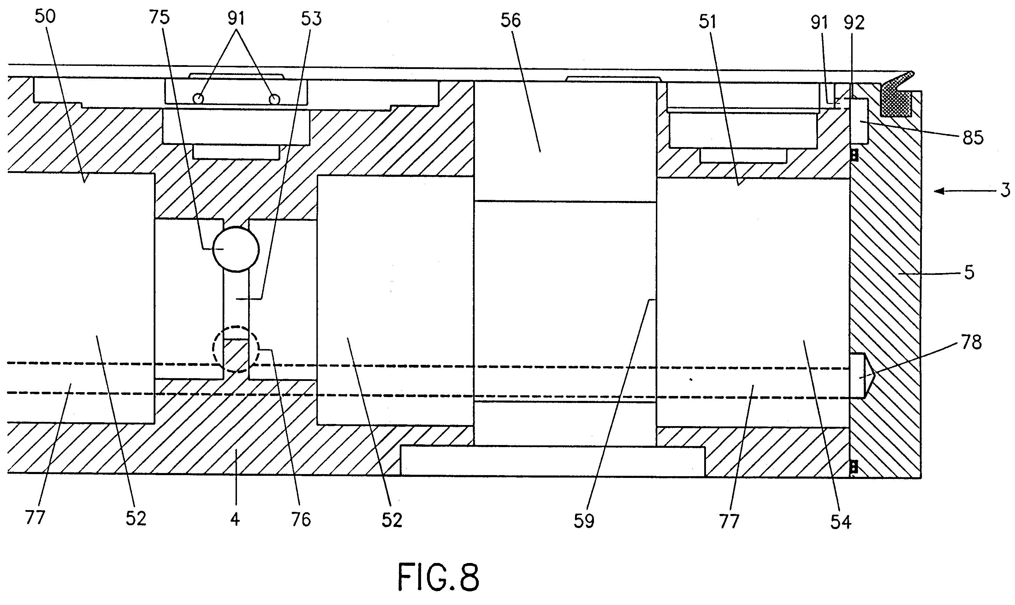

Einzelheiten der Spannorgane 40, 41 gehen aus der in grösserem Massstab gezeichneten Fig. 5 und den zugehörigen Schnittbildern in den Fig. 6 bis 8 hervor, wobei sich die Darstellung in Fig. 5 aufgrund des identischen Aufbaus der beiden Spannorgane und deren symmetrischer Anordnung bezüglich der Mittellinie 45 im wesentlichen auf eine Hälfte des Untersatzes 1 beschränkt. Die Fig. 7 und 8 zeigen nur das leere Gehäuse 3 des Untersatzes 1, um die dort dargestellten Einzelheiten besser hervorzuheben.

Jedem Zughaken 42 ist ein Antriebsmittel zugeordnet, das dazu dient, den Zughaken aus der in den Fig. 5 und 6 dargestellten Ruhelage zunächst in eine Anfangslage und nach dem Aufsetzen des Werkstückträgers 2 in die Wirklage zu verschwenken und anschliessend die Spannkraft zu erzeugen. Als Antriebsmittel sind im Gehäuseblock 4 zwei hydraulisch oder pneumatisch arbeitende Kraftzylinder 46 und 47 mit gegenläufig arbeitenden Kolben 48 bzw. 49 vorhanden. Die Kolben 48, 49 bewegen sich in zwei gleichachsigen Zylinderbohrungen 50 und 51, wobei die zentral gelegenen Arbeitsräume 52 der beiden Kraftzylinder 46, 47 durch eine Öffnung 53 miteinander verbunden und die äusseren Arbeitsräume 54 durch den Abschlussdeckel 5 verschlossen sind. Die Kolben 48, 49 sind beidseitig mit einem den betreffenden Arbeitsräumen 52 und 54 wechselweise zuführbaren Druckmittel beaufschlagbar und stehen mit je einem Zughaken 42 in direkter Wirkverbindung.

Der Gehäuseblock 4 weist in einem Bereich, der zwischen den beiden Arbeitsräumen 52, 54 jedes Kraftzylinders 46, 47 liegt, eine quer zur Längsachse der Zylinderbohrung 50 bzw. 51 mittig verlaufende, an der Oberseite 11 des Gehäuseblocks 4 offene Ausnehmung 56 auf, und der zugehörige Kolben 48 bzw. 49 besitzt eine entsprechend gelagerte, durchgehende Ausnehmung 57. Der Zughaken 42 ist mit einem länglichen Schaft 58 versehen, welcher die zur Zylinderbohrung 50 bzw. 51 führende Ausnehmung 56 im Gehäuseblock 4 und die Ausnehmung 57 im Kolben 48 bzw. 49 durchsetzt. Im Betrieb der Spannorgane dient eine Seitenfläche 59 der Ausnehmung 56 im Gehäuseblock 4 zur Längsführung des Schaftes 58. Ferner weist der Schaft 58 des Zughakens 42 seitliche Schultern 60 und die Ausnehmung 57 im Kolben 48 bzw. 49 seitliche Absätze 61 auf, wobei die Schultern 60 und die Absätze 61 zusammen ein Keilgetriebe bilden und gegenüber der Bewegungsachse der Kolben 48, 49 um einen bestimmten Keilwinkel geneigt sind. Dieser Keilwinkel ist vorzugsweise so gewählt, dass das Keilgetriebe 60, 61 unter der am Zughaken 42 wirkenden Spannkraft selbsthemmend wirkt. Jeder der Kolben 48 und 49 steht ferner unter der Wirkung einer Druckfeder 62 bzw. 63, welche die Reibungskraft des selbsthemmenden Keilgetriebes 60, 61 unterstützt.

Der Zughaken 42 steht andererseits unter der Kraft einer in der Längsrichtung seines Schaftes 58 wirkenden Druckfeder 66, welche in einer exzentrischen Bohrung 67 des Schaftes 58 angeordnet ist und sich auf einer Bodenplatte 68 abstützt, die ihrerseits am Gehäuseblock 4 befestigt ist und deren Ausnehmung 56 nach unten abschliesst. An der Bodenplatte 68 ist ausserdem eine Schwelle 69 angebracht, welche einen Anschlag für das untere Ende des Schaftes 58 bildet.

Unter der Wirkung der Druckfedern 63 und 65 sowie des Keilgetriebes 60, 61 befindet sich der Zughaken 42 mit seinem Schaft 58 in einer die Ruhelage bildenden Vertikallage, wobei der Schaft 58 mit seinen Schultern 60 an den Absätzen 61 der Kolbenausnehmung 57 und seitlich an der Seitenfläche 59 der Gehäuseausnehmung 56 anliegt. Die der Seitenfläche 59 zugewandten Endkanten der Schultern 60 und Absätze 61 kommen dabei aufeinander zu liegen und bilden zusammen ein Schneidenlager 70, welches in der Anfangsphase des Kolbenarbeitshubes als Schwenklager für den Zughaken 42 wirksam ist.

Für die Zufuhr des Druckmittels zu den Arbeitsräumen 52 und 54 der Kraftzylinder 46 und 47 sind an einer Längsseite des Gehäuseblocks 4 zwei mit Gewinde versehene Einlassbohrungen 75, 76 vorhanden (Fig. 1, 7 und 8), an welche Druckleitungen anschliessbar sind und welche mit jeweils einem der beiden Arbeitsräume 52, 54 verbunden sind. Wie aus den Fig. 7 und 8 hervorgeht, führt die Einlassbohrung 75 unmittelbar in die zentralen Arbeitsräume 52, welche durch die Öffnung 53 miteinander verbunden sind, während die Einlassbohrung 76 mit den äusseren Arbeitsräumen 54 der beiden Kraftzylinder 46, 47 verbunden ist. Die letztere Verbindung führt auf beiden Seiten von der Einlassbohrung 76 über einen Längskanal 77 und eine Ausnehmung 78 an der Innenseite des Abschlussdeckels 5 zum äusseren Arbeitsraum 54. In den Fig. 5 und 9 bis 11 sind die genannten Zuleitungen für das Druckmittel aus Gründen der besseren Übersicht nicht eingezeichnet.

Infolge des symmetrischen Aufbaus der Aufspanneinrichtung könnte, ohne besonderen Vorkehrungen, der Werkstückträger 2 wahlweise in zwei unterschiedlichen, um 180° gegeneinander verdrehten Lagen auf den Untersatz 1 aufgesetzt und an diesem festgespannt werden. Um diese Alternative auszuschliessen und eine eindeutige Lage des Werkstückträgers 2 bezüglich des Untersatzes 1 zwangsläufig herbeizuführen, sind an der Oberseite 11 des Untersatzes 1 vorstehende Stifte 79 unsymmetrisch angeordnet und an der Unterseite 9 der Werkstückträgerplatte 7 entsprechende Bohrungen 80 zur Aufnahme der Stifte 79 vorgesehen (Fig. 1 bis 4 und 6). Der Werkstückträger 2 kann unter diesen Umständen nur dann ordnungsgemäss auf den Untersatz 1 aufgesetzt werden, wenn der Werkstückträger 2 beim Aufsetzen eine Lage einnimmt, in der die Stifte 79 und die Bohrungen 80 zusammentreffen.

Bei der dargestellten Aufspanneinrichtung sind ferner Mittel vorgesehen, welche der Reinigung der Richtelemente und deren Reinhaltung im Arbeitseinsatz dienen und jeweils vor dem endgültigen Zusammenschluss des Werkstückträgers 2 und des Untersatzes 1 zur Wirkung gebracht werden.

Die Reinigung der Richtelemente geschieht durch Bestrahlung mit Druckluft. Dazu ist im Gehäuse 3 des Untersatzes 1 ein Leitungssystem vorhanden, welches Druckluft an alle Kontaktstellen der Richtelemente führt, wie nachstehend anhand der Fig. 1, 2 und 5 bis 7 beschrieben wird. In der oberen Randpartie des Gehäuses 3 verläuft ein Ringkanal 85, der durch entsprechende Ausnehmungen in den Abschlussdeckeln 5 und in den Randleisten 6 gebildet ist. Die Druckluft wird gemäss den Fig. 2 und 6 von einer Anschlussöffnung 86 aus über einen vertikalen Kanal 87 und einen horizontalen Kanal 88 zum Ringkanal 85 geleitet. Innerhalb des Gehäuseblocks 4 führen vom Ringkanal 85 einerseits horizontale Leitungen 89 zu vertikalen Strahldüsen 90, welche im Zentrum der Anschlagflächen 13 ausmünden (Fig. 7). Andererseits sind mit dem Ringkanal 85 horizontale Strahldüsen 91 direkt verbunden, deren Längsachse tangential auf die Arbeitsflanken der linearen Richtelemente 16, 18 und 20 gerichtet ist (Fig. 2, 5 und 6).

Ferner ist das Gehäuse 3 am ganzen Umfang seiner Oberseite 11 mit einer endlosen Reihe von vertikalen Schlitzen 92 versehen, welche vom Ringkanal 85 ausgehen und an der Oberseite 11 ausmünden. Gemäss den Fig. 5 und 7 sind die Schlitze 92 jeweils zwischen dem Gehäuseblock 4 einerseits und den Abschlussdeckeln 5 und Randleisten 6 andererseits gebildet und lediglich durch kurze Stützstege (nicht dargestellt) voneinander getrennt. Mit der durch die Schlitze 92 ausströmenden Druckluft lässt sich zwischen dem Gehäuseblock 4 und der Werkstückträgerplatte 7 vor dem endgültigen Zusammenschluss derselben ein Luftvorhang erzeugen, um den die Richtelemente enthaltenden Innenraum gegen das Eindringen von Staub zu schützen.

Schliesslich weist der Gehäuseblock 4 an der Umfangsrandpartie seiner Oberseite 11 eine Dichtleiste 93 aus elastischem Material auf, welche beim Festspannen der Werkstückträgerplatte 7 an dieser zum Anliegen kommt und dabei den Innenraum luftdicht abschliesst. Die Dichtleiste 93 weist eine schräg nach aussen aufwärts weisende Dichtlippe 94 auf, so dass allenfalls Luft von innen nach aussen strömen kann, aber nicht von aussen nach innen.

Ausser der Anschlussöffnung 86 für die Zufuhr von Druckluft ist eine weitere Anschlussöffnung 95 vorhanden (Fig. 1), welche in gleicher Weise wie jene mit dem Ringkanal 85 verbunden ist und gegebenenfalls zum Anschluss einer Saugleitung für wahlweisen Druck- oder Saugbetrieb oder zum Anschluss eines Instrumentes zur Drucküberwachung benützt werden kann. Andernfalls ist diese weitere Anschlussöffnung 95 verschlossen zu halten oder ganz wegzulassen.

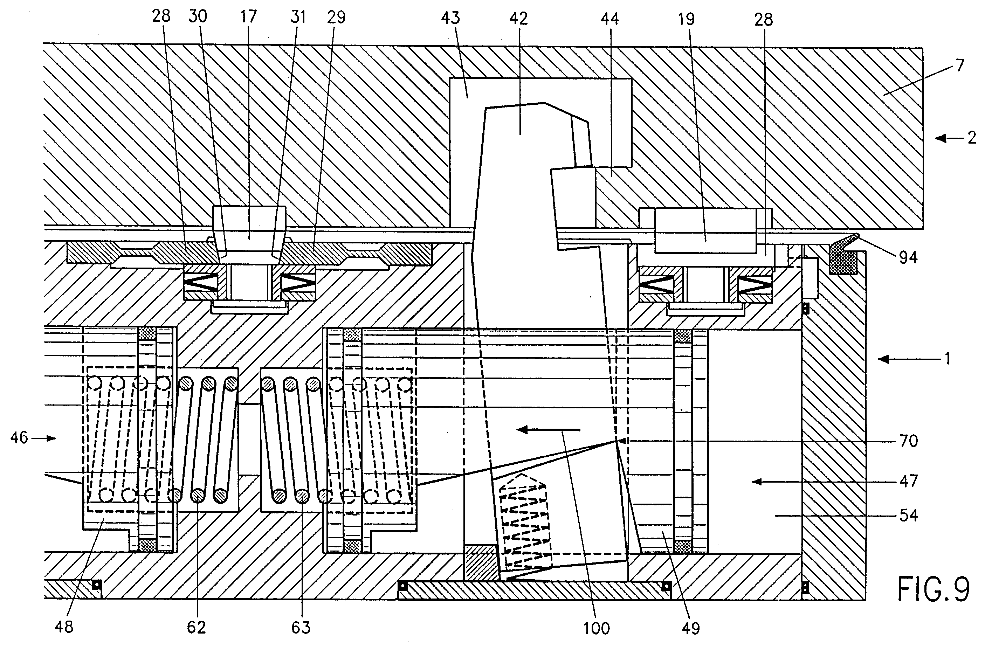

Die Wirkungsweise der beschriebenen Aufspanneinrichtung ist folgende:
Vor dem Aufsetzen des Werkstückträgers 2 auf den Untersatz 1 werden die äusseren Arbeitsräume 54 der Kraftzylinder 46, 47 mit Druckmittel beaufschlagt, das über die Einlassbohrung 76 (Fig. 8) zugeführt wird. Unter der Wirkung des Druckmittels bewegen sich die Kolben 48, 49, entgegen der Kraft der Druckfedern 62, 63, aufeinander zu (Richtungspfeil 100). Dabei erfassen die Kolben 48, 49 den jeweiligen Zughaken 42 am Schaft 58 in der Höhe des Schneidenlagers 70, während das untere Ende des Schaftes 58 an der Schwelle 69 zurückgehalten wird. Dadurch werden die Zughaken 42 aus ihrer Ruhelage (Fig. 5) um die vom Schneidenlager 70 gebildete Schwenkachse in die Anfangslage gemäss Fig. 9 verschwenkt.

In einer ersten, aus Fig. 6 ersichtlichen Stufe der Annäherung des Werkstückträgers 2 von oben her an den Untersatz 1 greifen die in der Anfangslage befindlichen Zughaken 42 der Spannorgane 40, 41 in die betreffenden Öffnungen 43 der Werkstückträgerplatte 7 und, bei seitenrichtiger Lage der letzteren, die Stifte 79 in die Bohrungen 80 derselben ein. In dieser Annäherungslage haben die jeweils paarweise zusammenarbeitenden Richtelemente noch keinen gegenseitigen Kontakt, sondern können noch einen gegenseitigen Abstand von mehreren mm haben. Spätestens in diesem Zeitpunkt wird den Kontaktstellen der Richtelementepaare die zu deren Reinigung dienende Druckluft zugeführt. Bei weiterer Annäherung des Werkstückträgers 2 bewirkt der Eingriff der Stifte 79 in die Bohrungen 80 eine grobe Positionierung des Werkstückträgers 2, so dass die linearen Richtelemente eine für deren Zusammenschluss geeignete gegenseitige Lage einnehmen.

In der in Fig. 9 dargestellten ersten Phase des Zusammenschlusses von Werkstückträger 2 und Untersatz 1 treffen vorerst nur die linearen Richtelemente 15, 16; 17, 18; 19, 20 (Fig. 2, 4) paarweise zusammen, wobei die keilförmigen Zentrierlineale 15, 17, 19 in die Zentrierspalten zwischen den betreffenden Zentrierlappen 28, 29 eindringen und mit deren Arbeitsflanken 30, 31 in Kontakt kommen. Damit ist die Position und winkelgerechte Lage des Werkstückträgers 2 in der X-Y-Ebene vorläufig festgelegt. In dieser Phase erreicht die Werkstückträgerplatte 7 zudem eine Tieflage, welche ein anschliessendes Verschwenken des Zughakens 42 in seine Wirkungslage ermöglicht, um den Vorsprung 44 in der betreffenden Öffnung 43 der Werkstückträgerplatte 7 zu hintergreifen. Die Werkstückträgerplatte 7 hat in dieser Phase die Anschlagflächen 13 am Untersatz 1 noch nicht erreicht, und der Spalt zwischen der Platte 7 und der Dichtlippe 94 ist noch offen, wobei der bis zum Schliessen dieses Spaltes wirksame Luftvorhang das Eindringen von Staub verhindert.

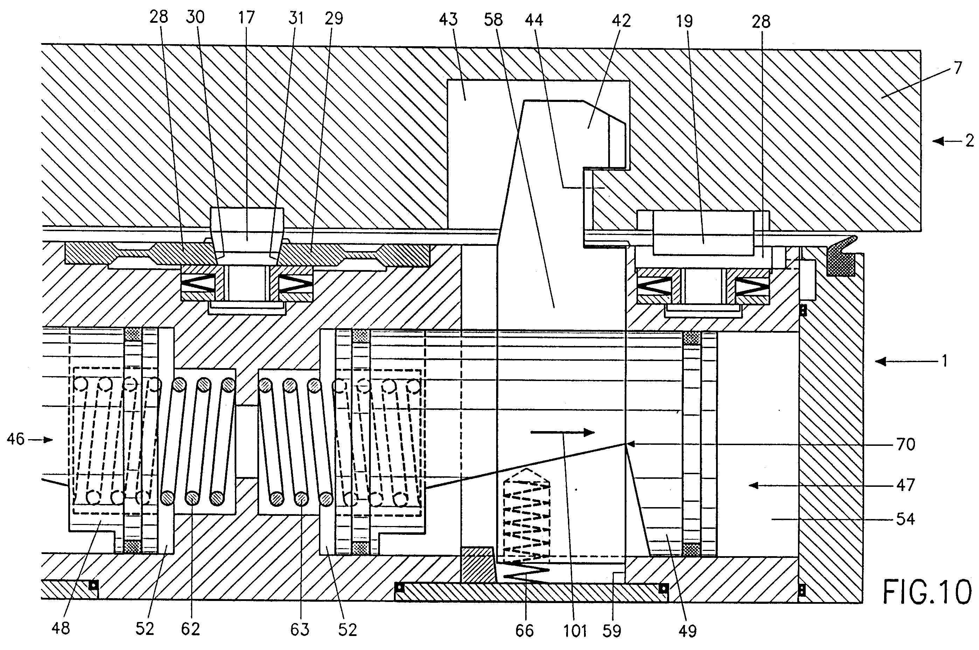

In der nächsten, aus Fig. 10 ersichtlichen Phase des Zusammenschlusses, während welcher der Werkstückträger 2 weiterhin lediglich mit seinen Zentrierlinealen 15, 17, 19 auf den Gegenstücken 16, 18, 20 des Untersatzes 1 ruht, wird die Druckmittelzufuhr zu den äusseren Arbeitsräumen 54 der Kraftzylinder 46, 47 unterbrochen und auf die inneren Arbeitsräume 52 umgeleitet, so dass sich die Kolben 48, 49 nunmehr nach aussen bewegen (Richtungspfeil 101). Der damit beginnende Arbeitshub der Kolben 48, 49 ermöglicht in seiner Anfangsphase eine Verschwenkung der Zughaken 42 aus ihrer die Ruhelage bildenden Schräglage in die Wirklage mit zur Kolbenachse senkrecht stehenden Schaft 58, wobei die beiden Zughaken 42 unter der Einwirkung der an ihrem Schaft 58 unten angreifenden Druckfeder 66 im Uhrzeigersinn um das Schneidenlager 70 verschwenkt werden, bis der Schaft 58 an der Seitenfläche 59 der Ausnehmung 56 im Gehäuseblock 4 zum Anschlag kommt und der Zughaken 42 zugleich den Vorsprung 44 in der Öffnung 43 der Werkstückträgerplatte 7 hintergreift.

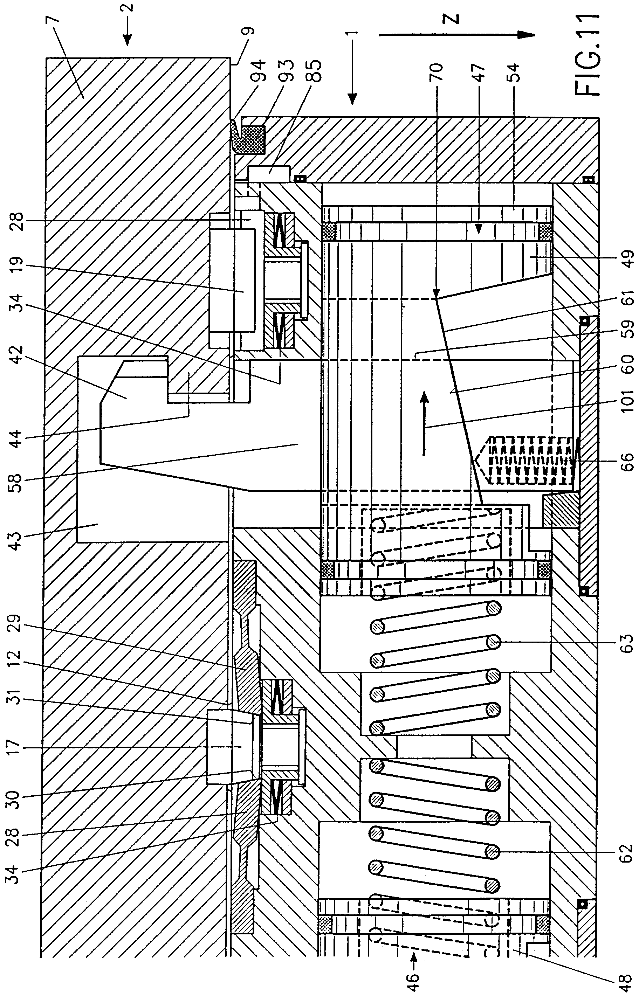

Während der Fortsetzung des Arbeitshubes der Kolben 48, 49 bis zu der in Fig. 11 dargestellten Endphase des Zusammenschlusses von Werkstückträger 2 und Untersatz 1 tritt das Keilgetriebe 60, 61 in Funktion, unter dessen Wirkung die Triebkraft der Kolben 48, 49 in eine Spannkraft des jeweiligen Zughakens 42 umgesetzt wird. Dabei gleiten die schrägen Absätze 61 an jedem der Kolben 48 und 49 über die gleichermassen schrägen Schultern 60 am Schaft 58 des zugehörigen Zughakens 42 hinweg, wobei der an der Seitenfläche 59 der Ausnehmung 56 zurückgehaltene Schaft 58 durch die Keilwirkung entlang der als Längsführung dienenden Seitenfläche 59 nach unten gezogen wird. Währenddessen entfernt sich das in dieser Phase nicht mehr benötigte Schneidenlager 70 am Kolben 48 bzw. 49 von dem betreffenden Schaft 58.

Unter dem Einfluss der in der beschriebenen Weise erzeugten, in Richtung der Z-Achse wirkenden Spannkraft wird der Werkstückträger 2 soweit an den Untersatz 1 herangezogen, bis die Werkstückträgerplatte 7 auf den Anschlagflächen 13 der am Untersatz 1 vorhandenen Vorsprünge 12 anstösst. Dieser Stosskontakt legt die Position des Werkstückträgers 2 in der Z-Achse fest. Zugleich dringen die keilförmigen Zentrierlineale 15, 17, 19 weiter in den Zentrierspalt der Gegenstücke 16, 18 bzw. 20 ein, wobei sich die Zentrierlappen 27, 28 derselben durchbiegen und die sie unterstützenden Tellerfedern 34 zusammengedrückt werden. Durch den auf diese Weise intensivierten Kontakt zwischen den paarweise zusammenarbeitenden linearen Richtelementen wird der Werkstückträger 2 in einer mit hoher Genauigkeit reproduzierbaren Position bezüglich der drei Koordinatenachsen X, Y, Z und winkelgerecht auf den Untersatz 1 ausgerichtet. Dementsprechend befindet sich das Werkstück, das am Werkstückträger befestigt ist, bei wiederholtem Aufspannen desselben auf den am Arbeitsplatz einer Bearbeitungsmaschine fixierten Untersatz stets in einer definierten Position.

In dem in Fig. 11 dargestellten Endzustand der Aufspanneinrichtung schliesst die Dichtleiste 93 mit der an die Unterseite 9 der Platte 7 gepressten Dichtlippe 94 die Richtelemente von der Umgebung ab und schützt diese so gegen äussere Einflüsse. Die Zufuhr von Druckluft in den Ringkanal 85 zur Bestrahlung der Richtelemente und zur Erzeugung des Luftvorhanges kann in diesem Zeitpunkt abgeschaltet werden. Gegebenenfalls kann auch die betreffende Zuleitung vom Untersatz 1 abgetrennt werden.

Das zwischen Kolben 48 bzw. 49 und Zughaken 42 befindliche Keilgetriebe 60, 61 ist vorzugsweise so ausgebildet, dass es nach Beendigung des Spannvorgangs bei einem anschliessenden Wegfall der Kolbentriebkraft, selbsthemmend wirkt. Der Spannungszustand wird in diesem Fall aufrechterhalten durch die auf die Zughaken 42 ausgeübte Spannkraft, unterstützt durch die am Kolben 48 bzw. 49 angreifende Druckfeder 62 bzw. 63. Dadurch besteht die Möglichkeit, auch die Leitungen für die Zufuhr des Druckmittels zu den Kraftzylindern 46, 47 vom Untersatz 1 abzukoppeln, so dass die von Zuleitungen gänzlich befreite Aufspanneinrichtung bei ihrem Einsatz am Arbeitsplatz einer Bearbeitungsmaschine ungehindert bewegt werden kann.

## Patentansprüche

1. Einrichtung zum positionsdefinierten Aufspannen eines Werkstücks am Arbeitsplatz einer Bearbeitungsmaschine, mit einem am Arbeitsplatz der Bearbeitungsmaschine zu fixierenden Untersatz (1) und einem auf den Untersatz aufsetzbaren und daran festspannbaren Werkstückträger (2), ferner mit Richtelementen (13 - 20) am Untersatz (1) und am Werkstückträger (2), welche paarweise zusammenarbeiten und den Werkstückträger (2) in drei zueinander senkrechten Koordinatenachsen (X, Y, Z) und winkelgerecht auf den Untersatz (1) ausrichten, und mit einer Spannvorrichtung (40, 41), deren Spannkraft den Werkstückträger (2) in der durch die Richtelemente (13 - 20) festgelegten Position am Untersatz (1) festhält, wobei als Richtelementepaare für die Festlegung der Position in einer zur Wirkungslinie der Spannkraft parallelen Koordinatenachse (Z) einander gegenüberstehende Anschlagflächen (13, 14) am Untersatz (1) und am Werkstückträger (2) vorhanden sind, während für die Festlegung der Position in einer durch die beiden anderen Koordinatenachsen (X, Y) gebildeten Koordinatenebene (X-Y) lineare Richtelementepaare (15, 16; 17, 18; 19, 20) vorgesehen sind, welche je ein keilförmiges Zentrierlineal (15, 17, 19) und ein Gegenstück (16, 18, 20) mit einem dazu passenden Zentrierspalt aufweisen, dadurch gekennzeichnet, dass von den die Position in der genannten Koordinatenebene (X-Y) festlegenden linearen Richtelementepaaren (15, 16; 17, 18; 19, 20) an zwei einander gegenüberliegenden Endbereichen der Einrichtung je ein Richtelementepaar (15, 16; 19, 20) angeordnet ist, welche beiden Richtelementepaare zusammen die Position in der einen, quer zur Verbindungslinie derselben verlaufenden Koordinatenachse (Y) und deren Winkellage festlegen, dass in der Mitte zwischen den genannten beiden Richtelementepaaren ein drittes Richtelementepaar (17, 18) für die Festlegung der Position in der anderen Koordinatenachse (X) angeordnet ist, und dass die Spannvorrichtung zwei synchron arbeitende Spannorgane (40, 41) aufweist, welche je zwischen einem endseitigen und dem mittleren der genannten drei linearen Richtelementepaare angeordnet sind.

2. Einrichtung nach Anspruch 1, dadurch gekennzeichnet, dass der Untersatz (1) einen Gehäuseblock (4) aufweist, an dessen Oberseite (11) die einen Richtelemente (13, 16, 18, 20) der Richtelementepaare (13, 14; 15, 16; 17, 18; 19, 20) für die Festlegung der Position des Werkstückträgers (2) in allen drei Koordinatenachsen (X, Y, Z) angeordnet sind und in dem die beiden Spannorgane (40, 41) untergebracht sind, und dass der Werkstückträger (2) eine Platte (7) aufweist, an deren ebener Unterseite (9) die den betreffenden Richtelementen (16, 18, 20) des Untersatzes (1) zugeordneten Richtelemente (15, 17, 19) für die Festlegung der Position des Werkzeugträgers (2) in den beiden die genannte Koordinatenebene (X-Y) bildenden Koordinatenachsen (X, Y) befestigt sind.

3. Einrichtung nach Anspruch 2, dadurch gekennzeichnet, dass die je einen Zentrierspalt bildenden Richtelemente (16, 18, 20) am Untersatz (1) und die je ein keilförmiges Zentrierlineal bildenden Richtelemente (15, 17, 19) am Werkstückträger (2) angeordnet sind.

4. Einrichtung nach Anspruch 3, dadurch gekennzeichnet, dass jedes der einen Zentrierspalt bildenden Richtelemente (16, 18, 20) aus zwei einzeln am Gehäuseblock (4) befestigten Zentrierlappen (28, 29) mit einander gegenüberstehenden, den Zentrierspalt begrenzenden Arbeitsflanken (30, 31) besteht.

5. Einrichtung nach Anspruch 4, dadurch gekennzeichnet, dass die Zentrierlappen (28, 29) biegeelastisch ausgebildet sind.

6. Einrichtung nach Anspruch 5, dadurch gekennzeichnet, dass die Zentrierlappen (28, 29) eine durch Querschnittsverminderung gebildete Biegestelle (32, 33) aufweisen.

7. Einrichtung nach Anspruch 6, dadurch gekennzeichnet, dass sich die beiden Zentrierlappen (28, 29) im Zentrierbereich gemeinsam auf einem separaten Federpaket (34) abstützen.

8. Einrichtung nach Anspruch 2, dadurch gekennzeichnet, dass jedes der beiden Spannorgane (40, 41) der Spannvorrichtung einen schwenkbaren Zughaken (42) aufweist, der in seiner Wirklage an der Platte (7) des Werkstückträgers (2) angreift.

9. Einrichtung nach Anspruch 8, dadurch gekennzeichnet, dass die Platte (7) des Werkstückträgers (2) zwei Öffnungen (43) aufweist, in welchen je ein Vorsprung (44) vorhanden ist, und dass jeder Zughaken (42) beim Aufsetzen des Werkstückträgers (2) auf den Untersatz (1) in die betreffende Öffnung (43) der Platte (7) eingreift und in seiner Wirklage den Vorsprung (44) hintergreift.

10. Einrichtung nach einem der Ansprüche 8 und 9, dadurch gekennzeichnet, dass jedem Zughaken (42) ein Antriebsmittel (46, 47) zum Verschwenken des Zughakens (42) aus seiner Ruhelage in die Wirklage und zur Erzeugung der Spannkraft zugeordnet ist.

11. Einrichtung nach Anspruch 10, dadurch gekennzeichnet, dass als Antriebsmittel im Gehäuseblock (4) zwei Kraftzylinder (46, 47) mit gegenläufig arbeitenden Kolben (48, 49) vorgesehen sind, welche Kolben beidseitig mit einem Druckmittel beaufschlagbar sind und mit je einem Zughaken (42) in direkter Wirkverbindung stehen.

12. Einrichtung nach Anspruch 11, dadurch gekennzeichnet, dass der Gehäuseblock (4) in einem zwischen den beiden Arbeitsräumen (52, 54) jedes Kraftzylinders (46, 47) liegenden Bereich eine quer zur Längsachse des Kraftzylinders mittig verlaufende, an der Oberseite (11) des Gehäuseblocks (4) offene Ausnehmung (56) aufweist und der zugehörige Kolben (48, 49) eine entsprechend gelagerte, durchgehende Ausnehmung (57) besitzt, und dass der Zughaken (42) mit einem länglichen Schaft (58) versehen ist, der die Ausnehmungen (56, 57) im Gehäuseblock (4) und im Kolben (48, 49) durchsetzt und mit dem Kolben durch ein Keilgetriebe (60, 61) verbunden ist, das die Triebkraft des Kolbens (48, 49) in eine Spannkraft des Zughakens (42) umsetzt.

13. Einrichtung nach Anspruch 12, dadurch gekennzeichnet, dass der Schaft (58) des Zughakens (42) seitliche Schultern (60) und die Ausnehmung (57) des Kolbens (48, 49) seitliche Absätze (61) aufweist, dass die Schultern (60) und Absätze (61) zusammen das Keilgetriebe bilden und gegenüber der Bewegungsachse des Kolbens (48, 49) um einen bestimmten Keilwinkel geneigt sind, und dass der Schaft (58) des Zughakens (42) an einer seitlichen Führungsfläche (59) in der Ausnehmung (56) am Gehäuseblock (4) längsgeführt ist und unter dem Druck einer in seiner Längsrichtung wirkenden Feder (66) mit seinen Schultern (60) an den Absätzen (61) der Kolbenausnehmung (57) anliegt.

14. Einrichtung nach Anspruch 13, dadurch gekennzeichnet, dass der Arbeitshub des Kolbens (48, 49) in seiner Anfangsphase dazu dient, den Zughaken (42) aus einer die Anfangslage bildenden Schräglage in die Wirklage mit zur Kolbenachse senkrecht stehendem Schaft (58) zu schwenken.

15. Einrichtung nach Anspruch 14, dadurch gekennzeichnet, dass die der Führungsfläche (59) des Schaftes (58) zugewandten Endkanten der Schultern (60) und Absätze (61) zusammen ein Schneidenlager (70) bilden, welches in der Anfangsphase des Arbeitshubes des Kolbens (48, 49) als Schwenklager für den Zughaken (42) wirksam ist.

16. Einrichtung nach Anspruch 15, dadurch gekennzeichnet, dass am unteren Ende der Ausnehmung (56) im Gehäuseblock (4) eine Schwelle (69) vorgesehen ist, an welcher das untere Ende des Schaftes (58) des Zughakens (42) beim Rückzug des Kolbens (48, 49) zum Anschlag kommt, wodurch der Zughaken (42) bei der weiteren Rückzugbewegung des Kolbens (48, 49) aus der Wirklage in die Anfangslage geschwenkt wird.

17. Einrichtung nach einem der Ansprüche 12 bis 16, dadurch gekennzeichnet, dass Mittel zur Aufrechterhaltung der Spannkraft des Zughakens (42) während einer Unterbrechung der Druckbeaufschlagung des Kolbens (48, 49) vorgesehen sind.

18. Einrichtung nach Anspruch 17, dadurch gekennzeichnet, dass der Keilwinkel des Keilgetriebes (60, 61) so gewählt ist, dass das Keilgetriebe bei nach erfolgtem Spannvorgang wegfallender Kolbentriebkraft unter der Einwirkung der am Zughaken (42) wirkenden Spannkraft selbsthemmend wirkt.

19. Einrichtung nach Anspruch 18, dadurch gekennzeichnet, dass eine auf den Kolben (48, 49) wirkende, die Reibungskraft des selbsthemmenden Keilgetriebes (60, 61) unterstützende Druckfeder (62, 63) vorgesehen ist.

20. Einrichtung nach einem der Ansprüche 1 bis 7, dadurch gekennzeichnet, dass der die Richtelemente (13 - 20) enthaltende Raum zwischen dem Gehäuseblock (4) und der Werkstückträgerplatte (7) im festgespannten Zustand der letzteren luftdicht abgeschlossen ist.

21. Einrichtung nach Anspruch 20, dadurch gekennzeichnet, dass der Gehäuseblock (4) an der Umfangsrandpartie seiner Oberseite (11) eine Dichtleiste (93) aus elastischem Material aufweist, welche beim Festspannen der Werkstückträgerplatte (7) an dieser zum Anliegen kommt.

22. Einrichtung nach einem der Ansprüche 1 bis 7, dadurch gekennzeichnet, dass Mittel (85, 90, 91) zur Reinigung der Richtelemente (13 - 20) durch Bestrahlung mit Druckluft vorgesehen sind.

23. Einrichtung nach einem der Ansprüche 1 bis 7, dadurch gekennzeichnet, dass Mittel (85, 92) vorgesehen sind, welche zwischen dem Gehäuseblock (4) und der Werkstückträgerplatte (7) vor dem endgültigen Zusammenschluss derselben einen Luftvorhang zum Schutz des Innenraums gegen das Eindringen von Staub erzeugen.

24. Einrichtung nach den Ansprüchen 22 und 23, dadurch gekennzeichnet, dass der Gehäuseblock (4) einen umlaufenden Druckluftkanal (85) aufweist, an den auf den Kontaktbereich der Richtelemente (13 - 20) gerichtete Strahldüsen (90, 91) sowie Schlitze (92) für die Erzeugung des Luftvorhangs angeschlossen sind.

## Claims

1. A device for clamping a workpiece in a defined position at the work-place of a processing machine, with a base member (1) to be secured at the work-place of the processing machine, and with a workpiece carrier (2) to be positioned on the base member and be clamped thereon, furthermore with aligning elements (13 - 20) on the base member (1) and on the workpiece carrier (2), which cooperate in pairs and align the workpiece carrier (2) in three coordinate axes (X, Y, Z) that are perpendicular to one another and in the correct angular position on the base member (1), and with a clamping element (40, 41) whose clamping force holds the workpiece carrier (2) in the position on the base member (1) defined by the aligning elements (13 - 20), in which arrangement stop faces (13, 14) disposed opposite each other are provided on the base member (1) and the workpiece carrier (2) as pairs of aligning elements for defining the position in a coordinate axis (Z) that is parallel to the line of action of the clamping force, while for defining the position in a coordinate plane (X-Y) formed by the two other coordinate axes (X, Y), pairs of linear aligning elements (15, 16; 17, 18; 19, 20) are provided which each have a wedge-shaped centring ruler (15, 17, 19) and a bearing component (16, 18, 20) with a centring slot matched thereto; characterized in that, out of the pairs of linear aligning elements (15, 16; 17,18; 19, 20) defining the position of the said coordinate plane (X-Y), one pair of aligning elements (15, 16; 19, 20) each is arranged at two end zones of the device lying opposite each other, which two pairs of aligning elements together define the position in one coordinate axis (Y) extending transversely to the line connecting them and its angular position; that at the centre between the said two pairs of aligning elements there is arranged a third pair of aligning elements (17, 18) for defining the position in the other coordinate axis (X); and that the clamping device has two synchronously operating clamping elements (40, 41) which are arranged between one pair of aligning elements at the end and the central pair of the said three pairs of linear aligning elements respectively.

2. A device according to claim 1, characterized in that the base member (1) has a casing block (4) at the top (11) whereof there is arranged one set of aligning elements (13, 16, 18 20) of the pairs of aligning elements (13, 14; 15, 16; 17, 18; 19, 20) for defining the position of the workpiece carrier (2) in all the three coordinate axes (X, Y, Z) and wherein the two clamping elements (40, 41) are accommodated; and that the work-piece carrier (2) has a plate (7) at whose flat bottom (9) there are secured, assigned to the respective aligning elements (16, 18, 20) of the base member (1), the aligning elements (15, 17, 19) for defining the position of the workpiece carrier (2) in the two coordinate axes (X, Y) forming the said coordinate plane (X-Y).

3. A device according to claim 2, characterized in that the aligning elements (16, 18, 20) forming one centring slot each are arranged on the base member (1), and the aligning elements (15, 17, 19) forming one wedge-shaped centring ruler each are arranged on the workpiece carrier (2).

4. A device according to claim 3, characterized in that each of the aligning elements (16, 18, 20) forming a centring slot consists of two centring tabs (28, 29) individually fixed on the casing block (4), with working flanks (30, 31) that are opposed to each other and delimit the centring slot.

5. A device according to claim 4, characterized in that the centring tabs (28, 29) are designed to be resilient in flexure.

6. A device according to claim 5, characterized in that the centring tabs (28, 29) have a bending point (32, 33) formed by a reduction in their cross-section.

7. A device according to claim 6, characterized in that the two centring tabs (28, 29) are jointly supported in the centring zone on a separate spring assembly (34).

8. A device according to claim 2, characterized in that each of the two clamping elements (40, 41) of the clamping device has a pivotable draw hook (42) which acts in its active position on the plate (7) of the workpiece carrier (2).

9. A device according to claim 8, characterized in that the plate (7) of the workpiece carrier (2) has two openings (43) wherein there is provided one projection (44) each; and that, when the workpiece carrier (2) is fitted on the base member (1), each draw hook (42) engages in the respective opening (43) of the plate (7) and engages in its active position behind the projection (44).

10. A device according to one of claims 8 and 9, characterized in that each draw hook (42) is assigned a drive means (46, 47) for pivoting the draw hook (42) from its rest position into its active position and for generating the clamping force.

11. A device according to claim 10, characterized in that there are provided in the casing block (4), as the drive means, two power cylinders (46, 47) with pistons (48, 49) operating in opposite directions, which pistons can be acted on on both sides by a pressure medium and are disposed with one draw hook (42) each in a direct operative connection.

12. A device according to claim 11, characterized in that, in a zone lying between the two working chambers (52, 54) of each power cylinder (46, 47), the casing block (4) has at its top (11) an open cutout (56) extending transversely to the longitudinal axis of the power cylinder in a central position, and the associated piston (48, 49) has a correspondingly mounted through cutout (57), and that the draw hook (42) is provided with an elongate shaft (58) which passes through the cutouts (56, 57) in the casing block (4) and in the piston (48, 49), and is connected to the piston by means of a wedge drive (60, 61) that transforms the drive force of the piston (48, 49) into a clamping force of the draw hook (42).

13. A device according to claim 12, characterized in that the shaft (58) of the draw hook (42) has lateral shoulders (60) and the cutout (57) of the piston (48, 49) has lateral steps (61); that the shoulders (60) and steps (61) together form the wedge drive and are inclined by a certain wedge angle relative to the axis of displacement of the piston (48, 49), and that the shaft (58) of the draw hook (42) is carried on the casing block (4) for longitudinal displacement on a lateral guide face (59) in the cutout (56), and bears with its shoulders (60) under the pressure of a spring (66) acting in its longitudinal direction on the steps (61) of the piston cutout (57).

14. A device according to claim 13, characterized in that the working stroke of the piston (48, 49) serves in its initial stage to pivot the draw hook (42) out of an inclined position forming the initial position into the active position, with the shaft (58) disposed perpendicularly to the axis of the piston.

15. A device according to claim 14, characterized in that the end edges of the shoulders (60), and of the steps (61) facing the guide surface (59) of the shaft (58), together form a knife edge bearing (70) which acts in the initial stage of the working stroke of the piston (48, 49) as a swivel bearing for the draw hook (42).

16. A device according to claim 15, characterized in that, at the bottom end of the cutout (56) in the casing block (4), there is provided a threshold (69) whereon the bottom end of the shaft (58) of the draw hook (42) comes to bear during the return stroke of the piston (48, 49), whereby the draw hook (42) is pivoted from its active position into its initial position during the further return movement of the piston (48, 49).

17. A device according to one of claims 12 to 16, characterized in that means are provided for maintaining the clamping force of the draw hook (42) during an interruption of the pressure acting on the piston (48, 49).

18. A device according to claim 17, characterized in that the wedge angle of the wedge drive (60) is chosen in such a way that the wedge drive has a self-locking action under the effect of the clamping force acting on the draw hook (42) as the piston drive force declines after the clamping action has been effected.

19. A device according to claim 18, characterized in that a compression spring (62, 63) acting on the piston (48, 49) is provided which supports the friction force of the self-locking wedge drive (60, 61).

20. A device according to one of claims 1 to 7, characterized in that the space between the casing block (4) and the workpiece carrier plate (7) containing the aligning elements (13 - 20) is hermetically sealed in the clamped state of the plate.

21. A device according to claim 20, characterized in that the casing block (4) has, on the peripheral edge portion of its top (11), a sealing strip (93) made of an elastic material which, as the workpiece carrier plate (7) is clamped fast, comes to bear on the latter.

22. A device according to one of claims 1 to 7, characterized in that means (85, 90, 91) are provided for cleaning the aligning elements (13 - 20) by blasting with compressed air.

23. A device according to one of claims 1 to 7, characterized in that means (85, 92) are provided which generate an air curtain between the casing block (4) and the workpiece carrier plate (7) before the definite locking of the latter, for protecting the interior against the penetration of dust.

24. A device according to claims 22 and 23, characterized in that the casing block (4) has a peripheral compressed air duct (85) to which there are connected jet nozzles (90, 91) directed towards the contact zone of the aligning elements (13 - 20), as well as slots (92) for generating the air curtain.

## Revendications

1. Dispositif pour l'ablocage, défini en position, d'une pièce à l'emplacement de travail d'une machine d'usinage, comprenant une base (1), devant être fixée à l'emplacement de travail de la machine d'usinage, et un porte-pièce (2), agencé de façon à pouvoir être posé sur la base et à pouvoir être fixé à cette base d'une manière serrée, ainsi que des éléments de positionnement (13 - 20), disposés sur la base (1) et sur le porte-pièce (2), qui coopèrent deux à deux et assurent un positionnement du porte-pièce (2) suivant trois axes de coordonnées orthogonaux (X, Y, Z) et suivant un angle convenable, et qu'un dispositif de serrage (40, 41) dont la force de serrage immobilise le porte-pièce (2) sur la base (1) dans la position déterminée au moyen des éléments de positionnement (13 - 20), des surfaces de butée (13, 14) situées sur la base (1) et sur le porte-pièce (2) et se faisant face étant prévues en tant que paires d'éléments de positionnement pour la détermination de la position suivant un axe de coordonnées (Z) parallèle à la ligne d'action de la force de serrage, tandis que, pour la détermination de la position dans un plan de coordonnées (X-Y) formé par les deux autres axes de coordonnées (X, Y), il est prévu des paires d'éléments de positionnement (15, 16 ; 17, 18 ; 19, 20) allongés d'une manière rectiligne qui comprennent chacune un guide de centrage (15, 17, 19) en forme de coin et une pièce complémentaire (16, 18, 20) comportant une fente de centrage adaptée à ce guide, caractérisé en ce que, parmi les paires d'éléments de positionnement (15, 16 ; 17, 18, ;19, 20) allongés d'une manière rectiligne qui déterminent la position suivant ledit plan de coordonnées (X-Y), deux paires d'éléments de positionnement (15, 16 ; 19, 20) sont disposées respectivement dans deux zones d'extrémité du dispositif situées à l'opposé l'une de l'autre, ces deux paires d'éléments de positionnement déterminant ensemble la position suivant un premier axe de coordonnées (Y), orienté transversalement à la ligne de liaison, et la position angulaire de cet axe, en ce qu'une troisième paire d'éléments de positionnement (17, 18) servant pour la détermination de la position suivant l'autre axe de coordonnées (X) est disposée à égale distance entre les deux susdites paires d'éléments de positionnement et en ce que le dispositif de serrage comprend deux organes de serrage (40, 41) travaillant d'une manière synchrone qui sont disposés chacun entre l'une des paires d'extrémité, correspondante, parmi les susdites trois paires d'éléments de positionnement allongés d'une manière rectiligne, et la paire centrale de ces trois paires.

2. Dispositif selon la revendication 1, caractérisé en ce que la base (1) comprend un bloc-boîtier (4), sur la face supérieure (11) duquel les premiers (13, 16, 18, 20) des éléments constituant les paires d'éléments de positionnement (13, 14 ; 15, 16 ; 17, 18 ; 19, 20) servant à la détermination de la position du porte-pièce (2) suivant l'ensemble des trois axes de coordonnées (X, Y, Z) sont disposés et dans lequel les deux organes de serrage (40, 41) sont montés, et que en ce que le porte-pièce (2) comprend une plaque (7) sur la face inférieure plane (9) de laquelle sont fixés les éléments de positionnement (15, 17, 19), associés aux éléments de positionnement correspondants (16, 18, 20) de la base (1), qui servent à la détermination de la position du porte-pièce (2) suivant les deux axes de coordonnées (X, Y) formant ledit plan de coordonnées (X-Y).

3. Dispositif selon la revendication 2, caractérisé en ce que les éléments de positionnement (16, 18, 20) qui forment une fente de centrage donnée sont disposés sur la base (1) et les éléments de positionnement (15, 17, 19) qui forment un guide de centrage en forme de coin associé sont disposés sur le porte-pièce (2).

4. Dispositif selon la revendication 3, caractérisé en ce que chacun des éléments de positionnement (16, 18, 20) formant une fente de centrage est constitué de deux languettes de centrage (28, 29) fixées individuellement sur le bloc-boîtier (4) et présentant des flancs actifs (30, 31) qui se font mutuellement face et délimitent la fente de centrage.

5. Dispositif selon la revendication 4, caractérisé en ce que les languettes de centrage (28, 29) sont réalisées de façon à présenter une élasticité en flexion.

6. Dispositif selon la revendication 5, caractérisé en ce que les languettes de centrage (28, 29) comportent un emplacement de flexion (32, 33) formé au moyen d'une réduction de section transversale.

7. Dispositif selon la revendication 6, caractérisé en ce que les deux languettes de centrage (28, 29) s'appuient ensemble, dans la zone de centrage, sur une pile de ressorts (34) séparée.

8. Dispositif selon la revendication 2, caractérisé en ce que chacun des deux organes de serrage (40, 41) du dispositif de serrage comporte un crochet de traction (42), agencé de façon à pouvoir basculer, qui, dans sa position active, s'accroche sur la plaque (7) du porte-pièce (2).

9. Dispositif selon la revendication 8, caractérisé en ce que la plaque (7) du porte-pièce (2) comporte deux ouvertures (43) dans chacune desquelles une partie en saillie (44) est prévue, et en ce que chaque crochet de traction (42) s'engage, lors de la pose du porte-pièce (2) sur la base (1), dans l'ouverture (43) associée de la plaque (7) et s'accroche, dans sa position active, derrière la partie en saillie (44).

10. Dispositif selon l'une des revendication 8 et 9, caractérisé en ce qu'à chaque crochet de traction (42), il est associé un moyen d'entraînement (46, 47) servant à faire basculer le crochet de traction (42) de sa position de repos à la position active et à produire la force de serrage.

11. Dispositif selon la revendication 10, caractérisé en ce qu'en tant que moyens d'entraînement, il est prévu, dans le bloc-boîtier (4), deux vérins (46, 47) comportant des pistons (48, 49) travaillant dans des sens opposés, ces pistons étant agencés de façon à pouvoir être soumis des deux côtés à l'action d'un agent de pression et présentant chacun une liaison directe avec un crochet de traction (42) associé de façon à coopérer avec ce dernier.

12. Dispositif selon la revendication 11, caractérisé en ce que le bloc-boîtier (4) comporte, dans une zone située entre les deux chambres de travail (52, 54) de chaque vérin (46, 47), un évidement (56) qui s'étend dans une position médiane transversalement à l'axe longitudinal du vérin et débouche sur la face supérieure (11) du bloc-boîtier (4) et le piston associé (48, 49) comporte un évidement (57) continu disposé d'une manière correspondante et en ce que le crochet de traction (42) est pourvu d'une tige (58) allongée qui traverse les évidements (56, 57) situés dans le bloc-boîtier (4) et dans le piston (48, 49) et qui est reliée au piston au moyen d'un mécanisme à effet de coin (60, 61) qui transforme la force de déplacement du piston (48, 49) en une force de serrage du crochet de traction (42).

13. Dispositif selon la revendication 12, caractérisé en ce que la tige (58) du crochet de traction (42) comporte des épaulements latéraux (60) et l'évidement (57) du piston (48, 49) comporte des décrochements latéraux (61), en ce que les épaulements (60) et les décrochements (61) forment ensemble le mécanisme à effet de coin et sont inclinés d'un angle de coin déterminé vis-à-vis de l'axe de déplacement du piston (48, 49) et en ce que la tige (58) du crochet de traction (42) est guidée longitudinalement dans l'évidement (56) du bloc-boîtier (4) sur une surface de guidage (59) latérale et est en appui par ses épaulements (60) sur les décrochements (61) de l'évidement de piston (57) sous l'effet de la pression d'un ressort (66) exerçant son action suivant sa direction longitudinale.

14. Dispositif selon la revendication 13, caractérisé en ce que, dans sa phase initiale, la course de travail du piston (48, 49) sert à faire basculer le crochet de traction (42) d'une position inclinée, constituant la position initiale, jusque dans la position active dans laquelle la tige (58) est perpendiculaire à l'axe du piston.

15. Dispositif selon la revendication 14, caractérisé par ce que les arêtes d'extrémité des épaulements (60) et des décrochements (61) qui font face à la surface de guidage (59) de la tige (58) constituent ensemble un support à couteau (70) qui, dans la phase initiale de la course de travail du piston (48, 49), sert d'appui de basculement pour le crochet de traction (42).

16. Dispositif selon la revendication 15, caractérisé en ce qu'à l'extrémité inférieure de l'évidement (56) du bloc boîtier (4), il est prévu une barre transversale (69) sur laquelle l'extrémité inférieure de la tige (58) du crochet de traction (42) vient en butée lors du recul du piston (48, 49) de sorte que, lorsque le mouvement de recul du piston (48, 49) se poursuit, le crochet de traction (42) fait l'objet d'un basculement de la position active à la position initiale.

17. Dispositif selon l'une des revendications 12 à 16, caractérisé en ce qu'il est prévu des moyens servant à maintenir la force de serrage du crochet de traction (42) pendant une interruption de l'application de pression sur le piston (48, 49).

18. Dispositif selon la revendication 17, caractérisé en ce que l'angle de coin du mécanisme à effet de coin (60, 61) est choisi de façon que, lorsqu'une fois l'opération de serrage effectuée, la force de déplacement du piston disparaît, le mécanisme à effet de coin fonctionne avec une action d'autoblocage sous l'effet de la force de serrage s'exerçant sur le crochet de traction (42).

19. Dispositif selon la revendication 18, caractérisé en ce qu'il est prévu un ressort de compression (62, 63) exerçant son action sur le piston (48, 49) et assistant la force de frottement du mécanisme à effet de coin (60, 61) à autoblocage.

20. Dispositif selon l'une des revendication 1 à 7, caractérisé en ce que l'espace situé entre le bloc-boîtier (4) et la plaque de porte-pièce (7) qui contient les éléments de positionnement (13 - 20) est fermé d'une manière étanche à l'air lorsque ce bloc-boîtier et cette plaque de porte-pièce sont à l'état fixé d'une manière serrée.

21. Dispositif selon la revendication 1, caractérisé en ce que le bloc-boîtier (4) comporte, suivant la partie marginale périphérique de sa face supérieure (11), un cordon d'étanchéité (93) en matière élastique qui vient en appui sur la plaque de porte-pièce (7) lors de la fixation de cette dernière d'une manière serrée.

22. Dispositif selon l'une des revendication 1 à 7, caractérisé en ce qu'il est prévu des moyens (85, 90, 91) servant à nettoyer les éléments de positionnement (13 - 20) par projection d'air comprimé.

23. Dispositif selon l'une des revendications 1 à 7, caractérisé en ce qu'il est prévu des moyens (85, 92) qui, avant la solidarisation définitive du bloc-boîtier (4) et de la plaque de porte-pièce (7), produisent entre ces derniers un rideau d'air servant à protéger l'espace intérieur d'une pénétration de poussière.

24. Dispositif selon les revendications 22 et 23, caractérisé en ce que le bloc-boîtier (4) comporte un conduit d'air comprimé (85) qui en fait le tour et auquel sont raccordées des buses de projection (90, 92) dirigées sur la zone de contact des éléments d'alimentation (13, 20), ainsi que des fentes (92) servant à produire le rideau d'air.
